# EUROPEAN PATENT SPECIFICATION

(11) **EP 2 539 684 B1**
(45) Date of publication and mention of the grant of the patent: **04.12.2013**
(21) Application number: 11702474.5
(22) Date of filing: 10.02.2011
(51) Int. Cl.: G01M 7/08, E04B 1/98, G01N 29/04, G01N 17/00, G01M 99/00

(54) **TEST CHAMBER FOR EXPLOSION RESISTANT PRODUCTS**
TESTKAMMER FÜR EXPLOSIONSRESISTENTE PRODUKTE
CHAMBRE D'ESSAI POUR PRODUITS RÉSISTANTS À L'EXPLOSION

(30) Priority: 23.02.2010 IT MI20100280
(43) Date of publication of application: 02.01.2013
(73) Proprietor: Fidelibus, Antonio, 10134 Torino, TO (IT)
(72) Inventor: Fidelibus, Antonio, 10134 Torino, TO (IT)
(74) Representative: Spina, Alessandro
(86) International application number: PCT/EP2011/051972
(87) International publication number: WO 2011/104126

(56) References cited:
- EP-A2- 1 128 875
- DE-A1- 19 617 697
- Tyas, Andy: "Blast load & structural response measurement in small-scale experimental tests", , 3 November 2008 (2008-11-03), pages 1-36, XP002602590, Retrieved from the Internet: URL:http://www.civ.uth.gr/cost-c26/documen ts/10th%20meeting_Malta/WG3/Cost%20C26%20- %20Malta%20-%20AT.pdf [retrieved on 2010-09-28]

## Description

The present invention relates to a test chamber for testing and certifying explosion resistant products.

It is known that in order to sell explosion resistant products in the European Community it is necessary that the products bear a "CE" marking ensuring that the required reliability and quality Community standards are met.

In particular, the Italian safety standard, legislative decree 81/2008, and the related safety standards 99/92/CE and 94/9/CE require that these products, such as e.g. panels for making walls, doors and windows, be tested in special test chambers inside which explosions suitable to artificially reproduce the conditions of a real explosion, pressure conditions in particular, are simulated.

Test chambers, e.g. known from patents US 2659235 and US 7406806, are generally comprised of containers so configured to allow to air-tightly mount a product to be tested in such a way that the product forms a portion of the surfaces subjected to the explosion that is simulated. Inside the chamber an explosive charge, which is triggered from the outside by way of a suitable control system, is arranged. The walls of the test chambers are so sized to withstands the high pressures generated by an explosion without being deformed, so that it is possible to concentrate the effects of the simulated explosions on the tested product only.

DE 19617697 discloses a test chamber according to the preamble of claim 1.

In known test chambers all the tests are carried out under substantially static conditions in which the pressure generated by the explosion reaches maximum values in times in the order of milliseconds and remains substantially unchanged until when the chamber is opened in order to allow to remove the tested product.

On the contrary, in the case of a real explosion the pressure trend immediately after the explosion is generally very different. A real environment in fact is not generally hermetic and, for this reason, after having reached a peak value pressure diminishes more or less rapidly down to ambient values. Therefore, the forces withstood by explosion resistant products are of an impulsive type and not of a semi-static type such as those that can be simulated in test chambers.

Moreover, if the real environment in which an explosion occurs has apertures or is broken resulting in apertures towards surrounding environments, negative pressure conditions may also be established due to the escape of the gases generated by the explosion through these apertures. Therefore, explosion resistant products installed in real environments may be subjected to forces of an impulsive type even having opposite directions during the same explosion.

All these types of forces can not be simulated in known test chambers.

Another problem of the test chambers currently used is that explosions simulated under substantially static conditions lead to excessively oversize explosion resistant products, which negatively influences the manufacturing costs.

It is therefore an object of the present invention to provide a test chamber for explosion resistant products, which allows to overcome these disadvantages. Said object is achieved with a test chamber, whose main features are disclosed in the first claim, while other features are disclosed in the remaining claims.

An idea of solution to the technical problem of making test chambers allowing to simulate the pressure conditions of a real explosion is to provide the walls of a test chamber with a plurality of portions that are selectively removable and suitable to put into communication the inner volume of the chamber with the external environment surrounding it. In this way it is possible to simulate the effects of an explosion in real environments that, due to their nature, are not hermetic, thus advantageously allowing to reproduce the main characteristics of the environment in which the explosion resistant products will be installed and to test their real behavior.

Another advantage offered by the invention is that the possibility to simulate non-hermetic environments allows to design explosion resistant products according to their real intended use, thus avoiding an unneeded and expensive oversizing thereof.

Moreover, the possibility to configure the test chamber with apertures having a predefined size allows to evaluate at the same time the probability that the tested products be broken and the risks for the external environment surrounding the chamber, these parameters being both considered by the present standards.

Still another advantage of the test chamber according to the invention is that the explosive charge inserted into the chamber is enclosed in a special hermetic container arranged therein, inside which it is possible to generate explosive atmospheres having controlled temperature, pressure and humidity, thus contributing to achieve test conditions that are comparable not only to the structural characteristics of the real environment, but also to the climatic characteristics thereof.

Further advantages and features of the test chamber according to the present invention will become clear to those skilled in the art from the following detailed and non-limiting description of an embodiment thereof with reference to the attached drawings, wherein:
- figure 1 is a perspective view showing a test chamber according to the present invention on which an explosion resistant panel is mounted;
- figure 2 is a perspective view showing a cross-section of the test chamber of figure 1 taken along line II-II of figure 1; and
- figure 3 is a perspective view showing a longitudinal section of the test chamber of figure 1 taken along line III-III of figure 1.

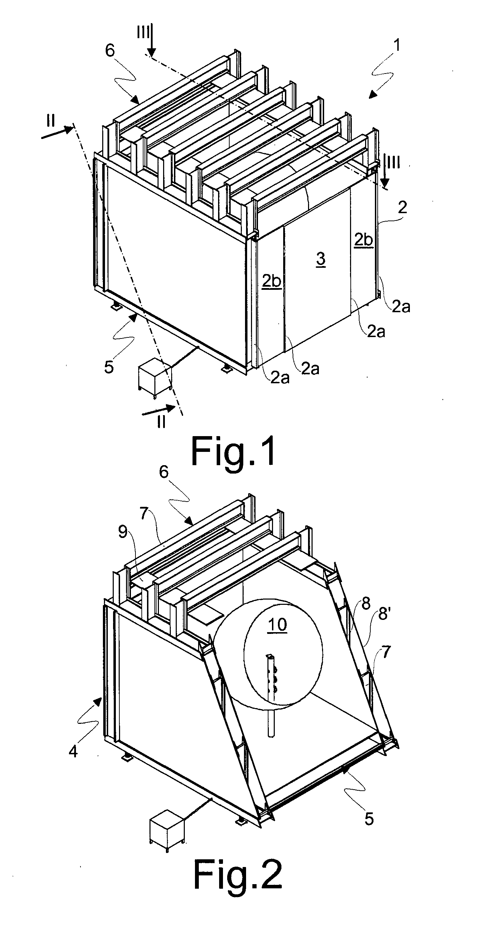

Referring to figure 1, the test chamber 1 according to the invention consists of a container open on one side and comprising on said open side connecting means 2 suitable to allow to air-tightly assemble an explosion resistant product, e.g. a panel 3.

The connecting means 2 may e.g. comprise guides 2a and, where necessary, also adapting members 2b allowing to close possible openings present between the product to be tested and the inner volume of the chamber 1.

The test chamber 1 comprises a plurality of side walls 4, a floor 5 and a ceiling 6 so configured to withstand the explosions simulated therein without being deformed. For this purpose, these walls may e.g. comprise a plurality of ribs 7 that are internally and externally coated by panels 8, 8'. The ribs 7 and the panels 8, 8' may be coupled to each other by arranging a dissipating material therebetween, so as to absorb the impulsive forces generated by the explosions simulated in the test chamber 1. Moreover, the inner spaces present between the inner and outer panels 8, 8' are preferably filled with materials suitable to absorb shocks, such as e.g. sand. In this way it is possible to spread the stresses generated by the explosions in a more uniform way and to achieve a higher degree of energy dissipation, thus contributing to ensure the safety of the chamber structure.

At least one of the side walls 4, floor 5 and ceiling 6 of the test chamber 1 according to the invention comprises a plurality of selectively removable portions suitable to put into communication the inner volume of the chamber 1 with the external environment surrounding it.

Referring to the embodiment shown in figure 1, the ceiling 6 of the test chamber comprises only an inner coating comprising a plurality of portions 9 that are selectively removable in order to put into communication the inner volume of the chamber 1 with the external environment surrounding it.

Similarly to the other walls of the test chamber, the removable portions 9 are in the form of slats connectable to the ribs 7 of the ceiling 6 such as the inner coating panels 8'.

It is understood that by varying the number and the arrangement of the removable portions 9 it is possible to create not only one or a number of apertures having a predefined surface area, but also particular geometries of the escape passages for the gases generated by an explosion, so as to allow to reproduce the main characteristics of the environment in which the products to be tested will be installed.

According to the degree of opening of the chamber defined by the removable portions 9 it is be possible to modify the time pressure needs to reach a peak value, as well as the value of the pressure peak that can be reached during the test, thus being generally possible to influence the pressure trend over time by acting on the parameters indicated in the various standards in the field, surface areas and volumes in particular.

According to another aspect of the invention, the explosive charge needed to simulate explosions in the test chamber is placed into a hermetic container 10 arranged inside the chamber 1, thus advantageously allowing to avoid any influence from the environment external to the chamber on the explosive charge.

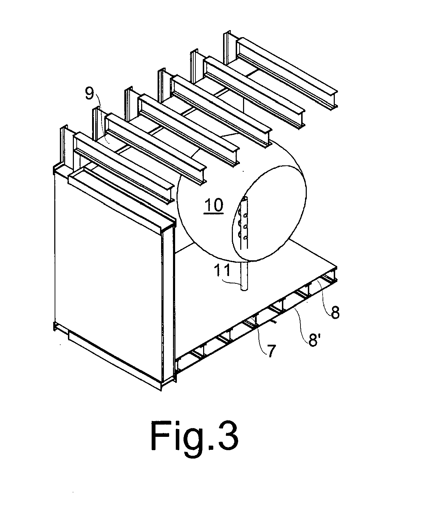

Referring to the embodiment shown in figures 2 and 3, the hermetic container 10 has a substantially spherical shape and is connected to the test chamber 1, e.g. on the floor 5, by way of a suitable supporting member 11. The container 10 is preferably made of a plastic material, such e.g. PA, suitable to house the inflammable substances that form the explosive charge until when an explosion is triggered and to be broken once a predefined pressure and/or temperature threshold is exceeded. Depending on the requirements and the amount of explosive charge needed for the test, the container 10 may possibly be provided with a plurality of ribs (not shown) allowing to improve its structural rigidity. It is understood that the pressure and/or temperature threshold beyond which the hermetic container 10 is broken may be designed either according to minimum pressure and/or temperature values, e.g. slightly higher than ambient pressure and temperature, or for much higher values according to the conditions of the real environment to be simulated. In the latter case, it is possible to carry out explosion resistance tests characterized by the so-called "domino effect", i.e. tests in which the explosion initially occurs within a small environment that can be simulated by the hermetic container 10, and only subsequently reaches the environment in which the products to be tested are arranged.

During the preparation of a test one or a number of inflammable substances are introduced into the container 10 and subsequently mixed with air in predefined amounts so as to obtain an explosive charge under predefined temperature, pressure and humidity conditions. The ignition of the charge so prepared occurs by way of a triggering device (not shown) arranged on the supporting member 11 and remotely controlled.

The supporting member 11 may advantageously be internally hollow, thus allowing to easily supply air and inflammable substances into the container 10.

Moreover, possible sensors suitable to allow to control the temperature, pressure and humidity conditions of the explosive charge may be arranged on the supporting member 11.

It is clear that the above-described embodiment of the test chamber according to the invention is only an example susceptible of numerous variants. For example, the hermetic container 10 may have any shape, provided that it can contain the explosive charges needed for the tests. Moreover, the hermetic container 10 must not necessarily be restrained to the test chamber 1, but may simply be placed on the floor 5 and provided with one or more closable apertures suitable to allow to introduce the explosive charges. Furthermore, in order to control the forces transmitted to the ground, it is possible to suspend the test chamber 1 by using a plurality of damping members, such as e.g. springs and/or dampers, thus allowing to simulate also the conditions in which the environment inside which the explosion occurs is restrained to the surrounding structure and/or environment. In addition, the test chamber 1 may be provided with further pressure, temperature and humidity sensors connected to data acquisition systems suitable to carry out a real time monitoring of the tests.

## Claims

1. A test chamber (1) for explosion resistant products, said test chamber (1) consisting of a container open on one side and comprising connecting means (2) suitable to allow to air-tightly assemble an explosion resistant product (3) on said open side, the test chamber (1) further comprising a plurality of side walls (4), a floor (5) and a ceiling (6) so configured as to withstand the explosions occurring therein without being deformed, **characterized in that** at least one among said side walls (4), floor (5) and ceiling (6) comprises a plurality of selectively removable portions (9) suitable to put into communication the inner volume of the chamber (1) with the external environment surrounding it.

2. A test chamber according to the previous claim, **characterized in that** the walls (4, 5, 6) comprise a plurality of ribs (7).

3. A test chamber according to the previous claim, **characterized in that** the walls (4, 5) without removable portions (9) are internally and externally coated with panels (8, 8').

4. A test chamber according to claim 2, **characterized in that** the removable portions (9) are in the form of slats connectable to the ribs (7).

5. A test chamber according to any of the previous claims, **characterized by** further comprising in its inside a hermetic container (10) suitable to contain an explosive charge, said hermetic container (10) being restrained to the test chamber (1) by means of a supporting member (11).

6. A test chamber according to the previous claim, **characterized in that** said supporting member (11) is internally hollow and suitable to allow to supply inflammable substances and air required for the preparation of the explosive charge within the hermetic container (10).

7. A test chamber according to claim 5 or 6, **characterized in that** the supporting member (11) is provided with a triggering device of the explosive charge as well as with temperature, pressure and humidity sensors.

8. A test chamber according to any of claims 5 to 7, **characterized in that** the hermetic container (10) is made of a plastic material.

## Patentansprüche

1. Eine Testkammer (1) für explosionsresistente Produkte, wobei die besagte Testkammer (1) aus einem Behälter besteht, der an einer Seite offen ist und geeignete Verbindungsmittel (2) aufweist, um die luftdichte Montage eines explosionsresistenten Produkts (3) an der besagten offenen Seite zu ermöglichen, wobei die Testkammer (1) ferner eine Mehrzahl von Seitenwänden (4) umfasst, einen Boden (5) und eine Decke (6), welche derart konfiguriert sind, dass sie den darin sich ereignenden Explosionen widerstehen, ohne deformiert zu werden, **dadurch gekennzeichnet, dass** wenigstens eine der besagten Seitenwände (4), Boden (5) und Decke (6) eine Mehrzahl von selektiv entfernbaren Bereichen (9) umfasst, welche es erlauben, das Innenvolumen der Kammer (1) mit der diese umgebenden, externen Umgebung in Verbindung zu setzen.

2. Eine Testkammer nach dem vorangehenden Anspruch, **dadurch gekennzeichnet, dass** die Wände (4, 5, 6) eine Mehrzahl von Rippen (7) aufweisen.

3. Eine Testkammer nach dem vorangehenden Anspruch, **dadurch gekennzeichnet, dass** die Wände (4, 5, 6) ohne entfernbare Bereiche (9) intern und extern mit Paneelen (9, 9') belegt sind.

4. Eine Testkammer nach Anspruch 2, **dadurch gekennzeichnet, dass** die entfernbaren Bereiche (9) die Form von mit den Rippen (7) verbindbaren Leisten aufweisen.

5. Eine Testkammer nach einem der vorangehenden Ansprüche, **dadurch gekennzeichnet, dass** sie in ihrem Inneren ferner einen luftdichten Behälter (10) umfasst, welcher geeignet ist, eine explosive Ladung aufzunehmen, wobei der besagte luftdichte Behälter (10) innerhalb der Testkammer (1) mittels eines Stützelements (11) zurückgehalten wird.

6. Eine Testkammer nach dem vorangehenden Anspruch, **dadurch gekennzeichnet, dass** das besagte Stützelement (11) innen hohl sowie in der Lage ist, entflammbare Substanzen und Luft zur Verfügung zu stellen, welche benötigt werden, um eine explosive Ladung innerhalb des luftdichten Behälters (10) bereitzustellen.

7. Eine Testkammer nach einem der Ansprüche 5 oder 6, **dadurch gekennzeichnet, dass** das Stützelement (11) mit einer Triggereinrichtung der explosiven Ladung versehen ist sowie mit Temperatur-, Druck- und Feuchtigkeitssensoren.

8. Eine Testkammer nach einem der Ansprüche 5 bis 7, **dadurch gekennzeichnet, dass** der luftdichte Behälter (10) aus einem Kunststoffmaterial hergestellt ist.

## Revendications

1. Chambre d'essai (1) pour produits résistants à l'explosion, ladite chambre d'essai (1) se composant d'un contenant ouvert d'un côté et comprenant des moyens de raccordement (2) appropriés pour permettre d'assembler, de manière étanche à l'air, un produit résistant à l'explosion (3) sur ledit côté ouvert, la chambre d'essai (1) comprenant en outre une pluralité de parois latérales (4), un plancher (5) et un plafond (6), configurés pour résister aux explosions ayant lieu à l'intérieur de cette dernière sans être déformés, **caractérisée en ce qu'**au moins l'un parmi lesdites parois latérales (4), le plancher (5) et le plafond (6), comprend une pluralité de parties sélectivement amovibles (9) appropriées pour mettre en communication le volume interne de la chambre (1) avec l'environnement externe l'entourant.

2. Chambre d'essai selon la revendication précédente, **caractérisée en ce que** les parois (4, 5, 6) comprennent une pluralité de nervures (7).

3. Chambre d'essai selon la revendication précédente, **caractérisée en ce que** les parois (4, 5) sans parties amovibles (9) sont intérieurement et extérieurement recouvertes avec des panneaux (8, 8').

4. Chambre d'essai selon la revendication 2, **caractérisée en ce que** les parties amovibles (9) se présentent sous la forme de lamelles pouvant être raccordées aux nervures (7).

5. Chambre d'essai selon l'une quelconque des revendications précédentes, **caractérisée en ce qu'**elle comprend en outre, dans son intérieur, un contenant hermétique (10) approprié pour contenir une charge explosive, ledit contenant hermétique (10) étant retenu sur la chambre d'essai (1) au moyen d'un élément de support (11).

6. Chambre d'essai selon la revendication précédente, **caractérisée en ce que** ledit élément de support (11) est intérieurement creux et approprié pour permettre d'alimenter des substances inflammables et de l'air nécessaires pour la préparation de la charge explosive à l'intérieur du contenant hermétique (10).

7. Chambre d'essai selon la revendication 5 ou 6, **caractérisée en ce que** l'élément de support (11) est prévu avec un dispositif de déclenchement de la charge explosive ainsi qu'avec des capteurs de température, de pression et d'humidité.

8. Chambre d'essai selon l'une quelconque des revendications 5 à 7, **caractérisée en ce que** le contenant hermétique (10) est réalisé à partir d'une matière plastique.
